# DEMANDE DE BREVET EUROPEEN

(11) **EP 1 494 480 A1**
(43) Date de publication de la demande: **05.01.2005**
(21) Numéro de dépôt: 04291567.8
(22) Date de dépôt: 22.06.2004
(51) Int. Cl.: H04N 7/18, G08B 15/00

(54) **Système de vidéosurveillance à caméra mobile**

(30) Priorité: 04.07.2003 FR 0308247
(71) Demandeur: Hymatom, 34740 Vendargues (FR)
(72) Inventeur: Taillade, Bernard, 34740 Vendargues (FR)
(74) Mandataire: Gosse, Michel

(57) **Abrégé**

L'invention concerne un système de vidéosurveillance d'un site donné comportant au moins une caméra (1) mobile en rotation selon deux axes et en translation selon une trajectoire (AB) donnée, un moyen de commutation reliant la ou lesdites caméras à au moins un moniteur vidéo, un poste de commande contenant notamment les données et les programmes destinés au pilotage en rotation et en translation de la caméra concernée.

Le système selon l'invention se caractérise essentiellement en ce que le programme conçu pour piloter la caméra (1) est adapté pour faire correspondre automatiquement le point d'impact au sol (IS) de son axe optique avec le point préalablement pointé par l'opérateur sur le plan du site mémorisé dans le poste de commande (4) et visualisé par le moniteur vidéo (3) qui visualise ensuite automatiquement l'image de la zone pointée.

## Description

### DOMAINE DE L'INVENTION

L'invention concerne un système de vidéosurveillance d'une zone bien définie d'un site donné, comportant au moins une caméra mobile en rotation selon deux axes et en translation selon une trajectoire donnée, un moyen de commutation reliant la ou lesdites caméras à au moins un moniteur vidéo de surveillance, un poste de commande contenant notamment les données et les programmes destinés au pilotage en rotation et en translation de la caméra concernée.

### ARRIERE PLAN TECHNOLOGIQUE

Dans les dispositifs de vidéosurveillance connus, on utilise généralement des caméras fixes et/ou mobiles télécommandées, au moyen d'un pupitre de type « joystick », en rotation horizontale sur 360° et en rotation verticale sur 90°, que l'on place en des points bien définis de manière à visualiser les zones géographiques à surveiller.

Dans certaines applications, la caméra doit pouvoir être déplacée linéairement dans l'espace afin de surveiller différentes zones d'un site donné.

Une première solution est décrite dans le brevet US-4120004 qui traite d'une caméra mobile se déplaçant linéairement sur des rails au moyen d'un câble d'entraînement. L'ensemble est contenu dans un caisson partiellement opaque pourvu d'ouvertures permettant de surveiller des zones bien définies contenant par exemple des caisses enregistreuses. Les données numériques de la caisse observée, converties en données vidéo, sont combinées au signal vidéo de la caméra. L'ensemble desdites données est ensuite mémorisé.

Une deuxième solution est décrite dans le brevet US-5225863 qui traite d'une caméra mobile en rotation sur elle même et en translation le long d'un câble porteur et entraînée par un câble tracteur.

Dans d'autres applications il serait souhaitable de visualiser automatiquement des zones bien précises d'un site donné à la demande de l'opérateur et ce de manière simple.

### RESUME DE L'INVENTION

L'invention vise à mettre en oeuvre des moyens qui permettent de répondre à ladite demande.

Elle concerne à cet effet un système de vidéosurveillance qui se caractérise essentiellement en ce que le programme conçu pour piloter la caméra est adapté pour faire correspondre automatiquement le point d'impact au sol de son axe optique avec le point préalablement pointé par l'opérateur sur le plan du site mémorisé dans le poste de commande et visualisé par le moniteur vidéo qui visualise ensuite automatiquement l'image de la zone pointée.

II se caractérise également en ce que ledit programme pilote la caméra en fonction des variations de ses coordonnées spatiales par rapport à celles de son point de départ, qui prennent en compte :
- la hauteur de la caméra au sol, la distance de celle-ci par rapport à l'une des extrémités de sa trajectoire dont les données relatives au calcul de ses coordonnées spatiales sont mémorisées dans le poste de commande ;
- les valeurs des angles horizontal et vertical que forme l'axe optique de la caméra avec sa trajectoire et qui sont fournies par les moyens de rotation équipant chaque caméra ;
- le plan du site préalablement mémorisé dans le poste de commande.

Selon la réalisation préférée de l'invention, le moyen d'entraînement en translation de la caméra est constitué d'au moins deux câbles mobiles fermés et supportés par deux paires de poulies d'extrémité, l'un d'entre eux, dénommé câble porteur, étant adapté pour assurer les fonctions de portage, de traction, d'entraînement et d'alimentation en énergie de ladite caméra et l'autre, dénommé câble secondaire, étant adapté pour assurer la fonction d'alimentation en énergie en combinaison avec le précédent ;

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :

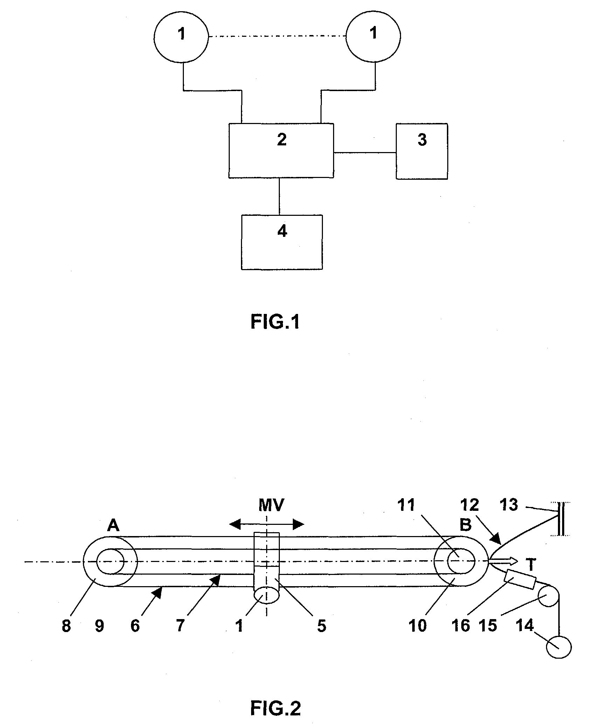

- la figure 1 est un schéma représentant les modules généraux d'un système de vidéosurveillance ;
- la figure 2 est un schéma simplifié représentant, dans un plan vertical, le moyen d'entraînement en translation de la caméra selon l'invention ;

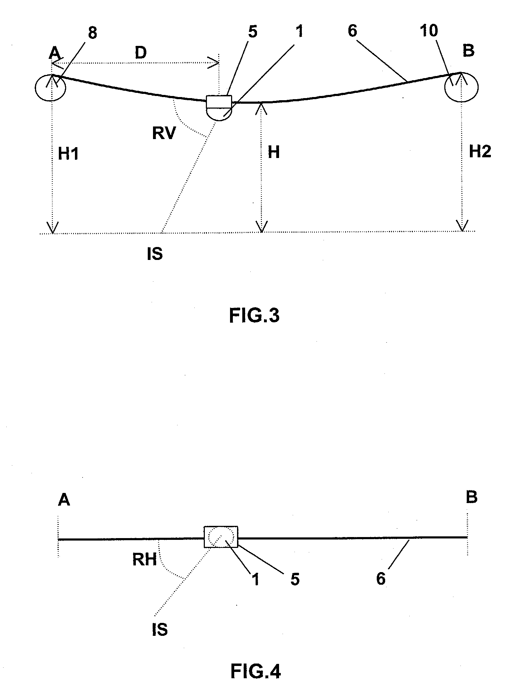

- la figure 3 est un schéma de principe représentant, dans un plan vertical, les paramètres pris en compte pour définir la position du câble porteur et de la caméra dans ledit plan ;
- la figure 4 est le schéma de la figure 3 en vue de dessus.

### DESCRIPTION DETAILLEE DE L'INVENTION

Le système de vidéosurveillance représenté aux figures comporte au moins une caméra (1) mobile en rotation selon deux axes et en translation selon une trajectoire (AB) donnée, un moyen de commutation (2), analogique ou numérique, reliant la ou lesdites caméras à au moins un moniteur vidéo de surveillance (3), un poste de commande (4) contenant notamment les données et les programmes destinés au pilotage en rotation et en translation de la caméra(1).

Le programme conçu pour piloter la caméra (1) est adapté pour faire correspondre automatiquement le point d'impact au sol (IS) de son axe optique avec le point préalablement pointé par l'opérateur sur le plan du site mémorisé dans le poste de commande (4) et visualisé par le moniteur vidéo (3) qui visualise ensuite automatiquement l'image de la zone pointée.

Ledit programme pilote la caméra (1) en fonction des variations de ses coordonnées spatiales par rapport à celles de son point de départ, qui prennent en compte :
- la hauteur (H) de la caméra au sol et la distance (D) de celle-ci par rapport à l'une des extrémités de sa trajectoire (AB) dont les données relatives au calcul de ses coordonnées spatiales sont mémorisées dans le poste de commande ;
- les valeurs des angles horizontal (RH) et vertical (RV) que forme l'axe optique de la caméra avec la trajectoire (AB) et qui sont fournies par les moyens de rotation équipant chaque caméra ;
- le plan du site préalablement mémorisé dans le poste de commande.

Ledit programme peut également piloter la caméra (1) en fonction d'une zone de couverture optique de celle-ci, préalablement mémorisée avec le plan du site, permettant au programme de connaître, pour une zone que l'opérateur souhaite visualiser, la présence d'un obstacle dans le trajet optique de la caméra, en fonction de la position de celle-ci sur sa trajectoire :
- en l'absence d'obstacle dans le trajet optique de la caméra, le programme calcule le meilleur compromis pour que l'angle de prise de vue vertical se rapproche d'une consigne générale, préalablement mémorisée ;
- en présence d'un obstacle dans le trajet optique de la caméra, le programme calcule, pour contourner l'obstacle, la meilleure position de la caméra sur sa trajectoire et la meilleure valeur de ses angles horizontaux et verticaux pour visualiser la zone pointée.

Ledit programme peut également piloter la caméra (1), en fonction de sous zones de couverture optique correspondant, chacune, à des paramètres de consignes de pilotage bien spécifiques, à savoir : l'angle de prise de vue idéal pour la commande en translation de chariot, la focale du zoom de la caméra, le nom de la zone visualisée afin que celle-ci soit incrustée par le programme dans l'image vidéo.

Le système de vidéosurveillance peut comporter un moyen d'entraînement en translation du chariot (5) porteur de chaque caméra (1), constitué d'au moins deux câbles mobiles (6,7) fermés et supportés par deux paires de poulies d'extrémité (8,9) et (10,11), l'un d'entre eux (6), dénommé câble porteur, étant adapté pour assurer les fonctions de portage, de traction, d'entraînement et d'alimentation en énergie de ladite caméra et l'autre (7), dénommé câble auxiliaire, étant adapté pour assurer la fonction d'alimentation en énergie en combinaison avec le précédent (6).

Les câbles (6,7) peuvent être adaptés pour assurer également les fonctions de transmission des données vidéo, de télécommande et de télémétrie.

Les poulies (9), (10) et (11) sont libres en rotation.

La caméra (1) est associée à un chariot (5) qui est solidarisé aux portions des câbles porteur (6) et secondaire (7) situées d'un même côté de l'axe reliant les poulies extrêmes et qui est libre en translation par rapport aux portions desdits câbles situées de l'autre côté dudit axe.

Dans le cas d'un moyen d'entraînement par câble, le programme contenu dans le poste de commande, pilote la caméra (1) en fonction des variations de ses coordonnées spatiales par rapport à celles de son point de départ qui prennent en compte :
- la hauteur (H) de la caméra par rapport au sol, la distance (D) de celle-ci par rapport à l'une (8) des deux poulies d'extrémité, la hauteur (H1) du point d'attache de ladite poulie, la hauteur (H2) du point d'attache de l'autre poulie (10), la tension (T) du câble porteur (6), les poids dudit câble, du chariot et de la caméra, la distance (D) étant connue au moyen d'un codeur de position angulaire associé à la poulie (8), dénommée poulie motrice, entraînée par à un moto réducteur ;
   b) les valeurs des angles horizontal (RH) et vertical (RV) que forme l'axe optique de la caméra avec le câble (6) et qui sont fournies par les moyens de rotation équipant chaque caméra ;
- le plan du site préalablement mémorisé dans le poste de commande.

Le système de vidéosurveillance selon l'invention, peut également comporter :
- des balais frotteurs adaptés pour assurer la continuité électrique entre les câbles (6,7) et le module de contrôle électronique associé ;
- des butées d'extrémité de calibrage et de sécurité réalisées par micro rupture, puis par rupture d'alimentation, en isolant l'un des câbles d'alimentation (6,7) à l'une de ses extrémités ;
- un moyen de tension (T) du câble principal (6) constitué d'un câble (12), relié, à l'une de ses extrémités, à un point fixe (13) et, à l'autre de ses extrémités, à un treuil (14) via une poulie (15) et un dynamomètre (16) de mesure de la tension optimale (T) dudit câble principal ;
- un moyen gyrostatique adapté pour rétablir la stabilité de prise de vue de la caméra active et compenser le balancement du chariot (5) porteur de ladite caméra, ledit moyen de détection d'oscillation assurant notamment la rotation des moteurs de la caméra mobile de façon inverse au balancement.

Le système de vidéosurveillance peut également comporter d'une manière plus générale :
- un analyseur d'images numériques détectant et localisant par exemple une intrusion ou l'apparition d'un événement dans l'image ;
- un module d'incrustation de texte vidéo renseignant l'opérateur sur l'heure, le nom de la caméra et celui de la zone géographique de l'image en cours d'affichage ;
- un programme, associé à sa carte de numérisation et de compression d'images, assurant la mémorisation d'images numériques et permettant une recherche d'image selon son contenu, la date et l'heure, mais également la zone visualisée par les caméras.

Bien entendu, l'invention n'est pas limitée aux modes de réalisation décrits et représentés pour lesquels on pourra prévoir d'autres variantes, en particulier dans :
- le type et le nombre de caméras associées au dispositif d'entraînement ;
- le type les dimensions des mécanismes à câbles et à poulies destinés à porter, déplacer et alimenter la ou les caméras ;
- les types de dispositifs annexes associés auxdits mécanismes, à savoir : le moyen de comptage du déplacement angulaire de la poulie motrice, les balais frotteurs, les butées d'extrémité ;
- le type de poste de commande et de programmes de pilotage associés ;
et l'étendre à d'autres applications.

## Revendications

1. Système de vidéosurveillance d'une zone bien définie d'un site donné, comportant au moins une caméra (1) mobile en rotation selon deux axes et en translation selon une trajectoire (AB) donnée, un moyen de commutation (2) reliant la ou lesdites caméras à au moins un moniteur vidéo (3), un poste de commande (4) contenant notamment les données et les programmes destinés au pilotage en rotation et en translation de la caméra (1) concernée ;
**caractérisé en ce que** le programme conçu pour piloter la caméra (1) est adapté pour faire correspondre automatiquement le point d'impact au sol (IS) de son axe optique avec le point préalablement pointé par l'opérateur sur le plan du site mémorisé dans le poste de commande (4) et visualisé par le moniteur vidéo (3) qui visualise ensuite automatiquement l'image de la zone pointée.

2. Système, selon la revendication 1, **caractérisé en ce que** ledit programme pilote la caméra (1) en fonction des variations de ses coordonnées spatiales par rapport à celles de son point de départ, qui prennent en compte :
- la hauteur (H) de la caméra au sol et la distance (D) de celle-ci par rapport à l'une des extrémités de sa trajectoire (AB) dont les données relatives au calcul de ses coordonnées spatiales sont mémorisées dans le poste de commande ;
- les valeurs des angles horizontal (RH) et vertical (RV) que forme l'axe optique de la caméra avec la trajectoire (AB) et qui sont fournies par les moyens de rotation équipant chaque caméra ;
- le plan du site préalablement mémorisé dans le poste de commande.

3. Système, selon la revendication 1, **caractérisé en ce que** le programme contenu dans le poste de commande, pilote la caméra (1) en fonction d'une zone de couverture optique de celle-ci, préalablement mémorisée avec le plan du site, permettant au programme de connaître, pour une zone que l'opérateur souhaite visualiser, la présence d'un obstacle dans le trajet optique de la caméra, en fonction de la position de celle-ci sur sa trajectoire ;
**en ce que** ledit programme pilote la caméra (1), en l'absence d'obstacle dans son trajet optique, en calculant le meilleur compromis pour que l'angle de prise de vue vertical se rapproche d'une consigne générale, préalablement mémorisée ;
**en ce que** ledit programme pilote la caméra (1), en présence d'un obstacle dans son trajet optique, en calculant, pour contourner l'obstacle, la meilleure position de la caméra sur sa trajectoire et la meilleure valeur de ses angles horizontaux et verticaux pour visualiser la zone pointée.

4. Système, selon la revendication 3, **caractérisé en ce que** le programme contenu dans le poste de commande, pilote la caméra (1) en fonction de sous zones de couverture optique correspondant, chacune, à des paramètres de consignes de pilotage bien spécifiques, à savoir : l'angle de prise de vue idéal pour la commande en translation de chariot, la focale du zoom de la caméra, le nom de la zone visualisée afin que celle-ci soit incrustée par le programme dans l'image vidéo.

5. Système, selon l'une quelconque des revendications précédentes, **caractérisé en ce qu'**il comporte un moyen d'entraînement en translation du chariot (5) porteur de chaque caméra (1), constitué d'au moins deux câbles mobiles (6,7) fermés et supportés par deux paires de poulies d'extrémité (8,9) et (10,11), l'un d'entre eux (6), dénommé câble porteur, étant adapté pour assurer les fonctions de portage, de traction, d'entraînement et d'alimentation en énergie de ladite caméra et l'autre (7), dénommé câble auxiliaire, étant adapté pour assurer la fonction d'alimentation en énergie en combinaison avec le précédent (6).

6. Système, selon la revendication 5, **caractérisé en ce que** les câbles (6,7) sont adaptés pour assurer les fonctions de transmission des données vidéo, de télécommande et de télémétrie.

7. Système, selon la revendications 5, **caractérisé en ce que** le programme contenu dans le poste de commande, pilote la caméra (1) en fonction des variations de ses coordonnées spatiales par rapport à celles de son point de départ qui prennent en compte :
- la hauteur (H) de la caméra par rapport au sol, la distance (D) de celle-ci par rapport à l'une (8) des deux poulies d'extrémité, la hauteur (H1) du point d'attache de ladite poulie, la hauteur (H2) du point d'attache de l'autre poulie (10), la tension (T) du câble porteur (6), les poids dudit câble, du chariot et de la caméra, la distance (D) étant connue au moyen d'un codeur de position angulaire associé à la poulie (8), dénommée poulie motrice, entraînée par à un moto réducteur ;
- les valeurs des angles horizontal (RH) et vertical (RV) que forme l'axe optique de la caméra avec le câble (6) et qui sont fournies par les moyens de rotation équipant chaque caméra ;
- le plan du site préalablement mémorisé dans le poste de commande.

8. Système, selon la revendication 5, **caractérisé en ce qu'**il comporte des balais frotteurs adaptés pour assurer la continuité électrique entre les câbles (6,7) et le module de contrôle électronique associé et d'alimentation basse tension.

9. Système, selon la revendication 5, **caractérisé en ce qu'**il comporte des butées d'extrémité de calibrage et de sécurité réalisées par micro rupture, puis par rupture d'alimentation, en isolant l'un des câbles d'alimentation (6,7) à l'une de ses extrémités.

10. Système, selon la revendication 5, **caractérisé en ce qu'**il comporte un moyen de tension du câble principal (6) constitué d'un câble (12), relié, à l'une de ses extrémités, à un point fixe (13) et, à l'autre de ses extrémités, à un treuil (14) via une poulie (15) et un dynamomètre (16) de mesure de la tension optimale dudit câble principal.

11. Système, selon la revendication 5, **caractérisé en ce qu'**il comporte un moyen gyrostatique adapté pour rétablir la stabilité de prise de vue de la caméra active et compenser le balancement du chariot (5) porteur de ladite caméra, ledit moyen de détection d'oscillation assurant notamment la rotation des moteurs de la caméra mobile de façon inverse au balancement.
